## Europäisches Patentamt

## European Patent Office

## Office européen des brevets

(11) Veröffentlichungsnummer: **0 028 368**

**A1**

(12) **EUROPÄISCHE PATENTANMELDUNG**

(21) Anmeldenummer: **80106484.1**

(22) Anmeldetag: **23.10.80**

(51) Int. Cl.³: **G 02 C 5/00**

(30) Priorität: **29.10.79 DE 7930575 U**

(43) Veröffentlichungstag der Anmeldung:
**13.05.81 Patentblatt 81/19**

(84) Benannte Vertragsstaaten:
**AT CH DE FR GB IT LI**

(71) Anmelder: **Kolkmann, Ingeborg**
**Haus Kolkmann**
**A-6323 Bad Häring(AT)**

(72) Erfinder: **Kolkmann, Ingeborg**
**Haus Kolkmann**
**A-6323 Bad Häring(AT)**

(74) Vertreter: **Lehn, Werner, Dipl.-Ing. et al,**
**Hoffmann. Eitle & Partner Patentanwälte**
**Arabellastrasse 4**
**D-8000 München 81(DE)**

(54) **Make-up-Brille.**

(57) Make-up-Brille mit Nasensteg (1) an welchem über die Höhe der Brillenrahmenteile (2) nach unten ragende schienenartige Schenkel (5) befestigt sind, welche in Nuten in den Brillenrahmenteilen (2) derart gleitend geführt sind, dass wahlweise das linke oder rechte Brillenrahmenteil (2) samt Brillenglas (4) im wesentlichen senkrecht zur Querachse des Nasensteges (1) von diesem weg nach unten schiebbar ist. Weiter sind zwischen den Schenkeln (5) und den Nuten Rastverbindungen, vorzugsweise in Form von Kerben (7) und Federn (8) oder Nasen, für die hochgeschobene und die heruntergeschobene Stellung der Brillenrahmenteile (2) vorgesehen.

FIG. 2

EP 0 028 368 A1

- 1 -

## Make-up-Brille

Die Erfindung bezieht sich auf eine Make-up-Brille, bestehend aus einem Brillengestell mit beidseitig eines Nasenstegs angebrachten Brillenrahmenteilen und an den Brillenrahmenteilen über Scharniere befestigten Brillenbügeln, bei welcher die Brillengläser selektiv gegenüber dem Nasensteg verschiebbar sind.

Für Brillenträgerinnen ist es schwierig, wenn nicht unmöglich, die Augen sauber zu schminken bzw. einen einwandfreien Lidstrich zu ziehen, wenn sie eine übliche Brille aufhaben. Wird andererseits die Brille abgenommen, so ist das Schminken der Augen wegen der Fehlsichtigkeit nicht möglich. Es war daher erforderlich, eine Brille zu entwerfen, bei welcher die Brillengläser abschwenkbar sind.

Eine Make-up-Brille mit schwenkbaren Gläsern ist durch die FR-PS 1 266 652 bekannt geworden. Bei dieser bekannten Make-up-Brille sind die Brillengläser um eine parallel zu den Brillengläsern verlaufende Achse an der Oberseite des Brillenstells hochschwenkbar. Diese Konstruktion hat zur Folge, daß kein übliches, auch nach dem Schminken zu tragendes Brillengestell verwendet werden kann.

Weiter ist durch die US-PS 3 495 898 eine Make-up-Brille bekannt geworden, welche ein Spezialgestell und lediglich ein einziges Brillenglas aufweist, das auf dem Spezialgestell vor das linke oder rechte Auge geschoben oder um einen zentralen Zapfen geschwenkt werden kann. Ein normales Tragen dieser Brille nach dem Schminken ist nicht möglich.

Durch die OE-PS 340 701 ist eine Make-up-Brille der eingangs beschriebenen Art bekannt geworden, bei welcher die Brillenrahmenteile über je ein Scharnier mit dem Nasensteg derart verbunden sind, daß wahlweise das linke oder rechte Brillenrahmenteil samt Brillenglas um eine zum Brillenglas im wesentlichen senkrechte Achse hochschwenkbar ist. Bei dieser Brille muß allerdings der Brillenbügel des hochgeschwenkten Brillenrahmenteils entweder nach außen abschwenkbar oder so nach innen schwenkbar sein, daß er das Hochschwenken des Brillenrahmenteils nicht behindert.

Schließlich ist durch das DE-GM 78 37 564 eine Make-up-Brille der eingangs beschriebenen Art bekannt geworden, bei welcher die Brillenrahmenteile über eine dünne teleskopartige Verbindung gegenüber dem Nasensteg hochschiebbar sind.

Der Erfindung liegt die Aufgabe zugrunde, eine Make-up-Brille der eingangs genannten Art zu schaffen, welche ein einwandfreies Schminken der Augen erlaubt und ein solches Brillengestell aufweist, daß die Brille auch nach dem Schminken auf normale Weise getragen werden kann, andererseits aber durch stabilen Aufbau ein problemloses Herunterschieben der Brillengläser ohne Schwenken der Brillenbügel möglich macht.

Diese Aufgabe wird erfindungsgemäß dadurch gelöst, daß der Nasensteg beidseitig über die Höhe der Brillenrahmenteile nach unten ragende schienenartige Schenkel aufweist, welche in Nuten in den Brillenrahmenteilen derart gleitend geführt sind, daß wahlweise das linke oder rechte Brillenrahmenteil samt Brillenglas im wesentlichen senkrecht zur Querachse des Nasensteges von diesem weg nach unten schiebbar ist, und daß zwischen den Schenkeln und den Nuten Rastverbindungen für die hochgeschobene und die heruntergeschobene Stellung der Brillenrahmenteile vorgesehen sind.

Mit einer solchen Ausbildung der Make-up-Brille fallen die Schwierigkeiten beim Schminken der Augen weg, da das Brillenglas, das genau angepaßt vor dem jeweils nicht zu schminkenden Auge vorgesehen ist, genügend Sehschärfe gibt, um das andere Auge völlig frei vom sonst störenden, nun heruntergeschobenen Brillengestell zu schminken.

Im heruntergeschobenen Zustand des einen Brillenrahmenteils stützt sich das Brillengestell wie auch im hochgeschobenen Zustand über den Nasensteg auf der Nase und über beide Brillenbügel an den Ohren der Brillenträgerin ab. Für den Schminkvorgang ist damit ein ausgezeichneter Sitz des nicht heruntergeschobenen Brillenrahmenteils gegeben.

Vorteilhaft sind die Schenkel und die Nuten in Form einer Schwalbenschwanzverbindung ineinander angeordnet. Weiter sind die Schenkel und die Nuten zweckmäßig auf der den Augen zugekehrten Seite der Brillenrahmenteile angeordnet. Die Rastverbindung schließlich besteht vorteilhaft aus je einer Kerbe am oberen und unteren Ende jedes Schenkels und einer Feder oder Nase am oberen Ende der Nut im Brillenrahmenteil.

Ein Ausführungsbeispiel der Erfindung ist in der Zeichnung dargestellt und wird im folgenden näher beschrieben. In der Zeichnung zeigen:

Fig. 1    eine Make-up-Brille im zusammengeschobenen Zustand,

Fig. 2    die am Nasensteg angebrachten Brillenrahmenteile in Vorderansicht, wobei ein Brillenrahmenteil heruntergeschoben ist, und

Fig. 3     eine Draufsicht auf Nasensteg und Brillenrahmenteile in Teildarstellung und vergrößerter Darstellung.

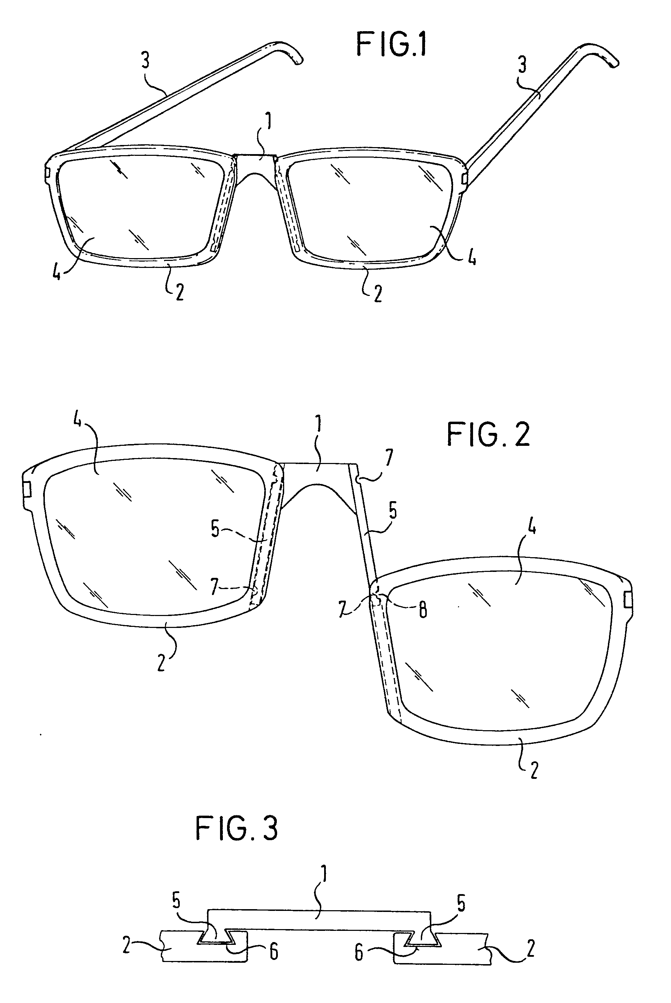

Die in Fig. 1 dargestellte Make-up-Brille weist einen Nasensteg 1 sowie an dessen beiden Enden angebrachte Brillenrahmenteile 2 auf. An den dem Nasensteg 1 gegenüberliegenden Seiten der Brillenrahmenteile 2 sind Brillenbügel
3 mittels Scharnieren angebracht. In die Brillenrahmenteile 2 sind genau den Augen der Brillenträgerin angepaßte
Brillengläser 4 fest eingesetzt.

Der Nasensteg 1 weist zwei über die gesamte Höhe jedes
Brillenrahmenteils 2 nach unten ragende schienenartige
Schenkel 5 auf, welche einen trapezförmigen, runden oder
sonstigen Querschnitt aufweisen. In den Brillenrahmenteilen sind entsprechende Nuten 6 vorgesehen, in denen die
Schenkel 5 des Nasenstegs 1 verschiebbar sind. Die Verbindung kann auch über eine Nut im Schenkel 5 und eine
Schiene am Brillenrahmenteil erfolgen. Jedes Brillenrahmenteil 2 samt zugehörigem Brillenglas 4 kann damit wahlweise nach oben geschoben werden. Das darunterliegende
Auge wird dann zum Schminken frei. Der Rest des Brillengestells sitzt über den Nasensteg 1 und den beiden Brillenbügeln 3 während des Schminkvorgangs sicher auf. Rastverbindungen 7, 8 zwischen den Schenkeln 5 und Nuten 6
sorgen für einwandfreies Beibehalten der hoch- und heruntergeschobenen Stellung der Brillenrahmenteile 2.

Fig. 2 zeigt eine Vorderansicht der Brillenrahmenteile 2
samt Nasensteg 1 mit einem Brillenrahmenteil 2 in heruntergeschobener Stellung. Es ist zu erkennen, daß in dieser
heruntergeschobenen Stellung des gesamten Brillenrahmenteils 2 ein unbehindertes Schminken des freigelegten Auges
möglich ist. Die Rastverbindung besteht aus Kerben 7 am oberen und unteren Ende jedes Schenkels 5 sowie einer Feder 8 am oberen Ende jeder Nut 6. Statt der Feder 8 kann auch eine Nase vorgesehen sein.

Fig. 3 zeigt eine Draufsicht auf den Nasensteg 1 in vergrößerter Darstellung, um die Anordnung und Form der Schenkel 5 und der Nuten 6 der Schiebeverbindung deutlich zu machen. Die Schenkel 5 sind in den Nuten 6 in Form einer Schwalbenschwanzverbindung mit trapezförmigem Querschnitt angeordnet. Der Querschnitt der Schenkel 5 und Nuten 6 kann auch kreisförmig, rechteckig oder dergleichen sein. Die Schenkel 5 und Nuten 6 können auf der den Augen zugekehrten oder der den Augen abgekehrten Seite der Brillenrahmenteile 2 angeordnet sein.

**0028368**

- 6 -

Patentansprüche:

1. Make-up-Brille, bestehend aus einem Brillengestell mit beidseitig eines Nasenstegs (1) angebrachten Brillenrahmenteilen (2) und an den Brillenrahmenteilen (2) über Scharniere befestigten Brillenbügeln (3), bei welcher die Brillengläser (4) selektiv gegenüber dem Nasensteg (1) verschiebbar sind, dadurch gekennzeichnet, daß der Nasensteg (1) beidseitig über die Höhe der Brillenrahmenteile (2) nach unten ragende schienenartige Schenkel (5) aufweist, welche in Nuten (6) in den Brillenrahmenteilen (2) derart gleitend geführt sind, daß wahlweise das linke oder rechte Brillenrahmenteil (2) samt Brillenglas (4) im wesentlichen senkrecht zur Querachse des Nasensteges (1) von diesem weg nach unten schiebbar ist, und daß zwischen den Schenkeln (5) und den Nuten (6) Rastverbindungen für die hochgeschobene und die heruntergeschobene Stellung der Brillenrahmenteile (2) vorgesehen sind.

2. Make-up-Brille nach Anspruch 1, dadurch gekennzeichnet, daß die Schenkel (5) und die Nuten (6) in Form einer Schwalbenschwanzverbindung ineinander angeordnet sind.

3. Make-up-Brille nach Anspruch 1 oder 2, dadurch gekennzeichnet, daß die Schenkel (5) und Nuten (6) auf der den Augen zugekehrten Seite der Brillenrahmenteile (2) angeordnet sind.

4. Make-up-Brille nach Anspruch 1, 2 oder 3, dadurch gekennzeichnet, daß die Rastverbindung aus je einer Kerbe (7) am oberen und unteren Ende jedes Schenkels (5) und einer Feder (8) oder Nase am oberen Ende der Nut (6) im Brillenrahmenteil (2) besteht.

1/1

FIG.1

FIG.2

FIG.3

# EUROPÄISCHER RECHERCHENBERICHT

Europäisches
Patentamt

Nummer der Anmeldung

EP 80 10 6484

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | US - A - 3 685 889 (ROBERT H. THATCHER)<br><br>  * Spalte 2, Zeilen 5-54 *<br><br>-- | 1 | G 02 C 5/00 |
| A | FR - A - 2 304 095 (PARODI JEAN ET PARODI MICHELINE)<br><br>  * Seite 3 *<br><br>---- | 1 | |

**RECHERCHIERTE SACHGEBIETE (Int. Cl.³)**

G 02 C 5/00
5/08
9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 02-02-1981 | TREVETIN |

EPA form 1503.1  06.78